# EUROPÄISCHE PATENTANMELDUNG

(11) **EP 4 349 476 A2**
(43) Veröffentlichungstag der Anmeldung: **10.04.2024**
(21) Anmeldenummer: 23197073.2
(22) Anmeldetag: 13.09.2023
(51) Int. Cl.: B01J 20/20, B01D 53/04, B01J 20/34, F25B 37/00

(54) **ADSORBER REGENERIERUNG DURCH VERDRÄNGUNGSDESORPTION**

(30) Priorität: 20.09.2022 DE 102022124104
(71) Anmelder: Vaillant GmbH, 42859 Remscheid NRW (DE)
(72) Erfinder: Badenhop, Thomas, 42499 Hückeswagen (DE); Salg, Frank, 42897 Remscheid (DE); Spahn, Hans-Josef, 40699 Erkrath (DE); Forner, Pascal, 42857 Remscheid (DE)
(74) Vertreter: Popp, Carsten

(57) **Zusammenfassung**

Verfahren zur Herstellung der Transportfähigkeit eines Adsorbers (1) für gasförmiges R290, R600a, R32 oder R270, der ein kontaminiertes Adsorptionsmittel enthält, der Adsorber aufweisend einen Gaseinlass (3) und einen Gasauslass (4), ein durchströmbares Adsorptionsmittel (2), sowohl am Gaseinlass (3) als auch am Gasauslass (4) gasdurchlässige Rückhalteeinrichtungen für Adsorbensmaterial, wobei der mit Adsorbat beladene Adsorber (1) mit einem Adsorptiv (5) gefüllt wird, welches das Adsorbat durch ein ungefährliches Adsorptiv verdrängt und das verdrängte Adsorbat in einen Auffangbehälter (9) gefüllt wird.

## Beschreibung

Die Erfindung betrifft die Behandlung eines Adsorbers mit einem beladenen Adsorptionsmittel, wobei die Beladung des Adsorptionsmittels aus einem Arbeitsfluid besteht, welches zuvor leckagebedingt aus einer Kältemaschine ausgetreten und von der Adsorbensschüttung des Adsorbers adsorbiert worden ist. Entsprechend üblicher Terminologie ist dabei das Adsorptionsmittel der Festkörper, an dessen Oberfläche die Adsorption stattfindet, das Adsorptiv der zu adsorbierende Stoff vor seiner Adsorption, hier also das ausgetretene Kältemittel, das Adsorbat das Adsorptiv nach vollzogener Adsorption und das Desorbat das durch Desorption wieder freigesetzte Adsorbat. Das Adsorptionsmittel kann dabei als Schüttung eingesetzt werden, wobei die Schüttung aus Formkörpern oder gebrochenen Stücken besteht, oder es kann aus porösen Schaumstoffen oder Wabenkörpern bestehen, die mit Aktivkohle belegt sind. Die Aktivkohle kann beispielsweise entsprechend der EP 3 160 639 B1 aus Vinylidenchloridcopolymer hergestellt werden.

Der Adsorber kann dabei dem Stand der Technik entsprechend sowohl innerhalb eines Gehäuses einer Kältemaschine oder Wärmepumpe oder außerhalb angeordnet sein. Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen FKW bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes an FKW entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Derartige Emissionen dürfen nicht mehr in die Umwelt gelangen, sie müssen sicher aufgefangen werden und entweder entsorgt oder recycliert werden, jeweils ohne Verluste.

Aber auch die klimafreundlicheren Kältemittel sind problematisch. Die Klimafreundlichkeit leitet sich zum einen aus den besonders hohen Wirkungsgraden, zum anderen aus dem geringen GWP (Global Warming Potential) her, beispielsweise hat R290 nur einen GWP-Wert von 3, es sind aber COP-Werte (Coefficient of Performance) von 3,5 bis 4 erreichbar, ähnliche Werte sind mit R600a und R1270 erreichbar. Nachteilig ist aber die hohe Entzündlichkeit. Auch Kompromisse werden versucht, etwa mit R32, R443a oder R441a, bei denen ein GWP von einigen Hundert und eine etwas verminderte Brennbarkeit angegeben wird, vor allem aber ein direkter Ersatz vorhandener Anlagen erreicht werden soll. Ein weiteres klimafreundliches Kältemittel ist beispielsweise Kohlendioxid mit einem GWP-Wert von 1, ein gefährliches Kältemittel ist weiterhin Ammoniak.

Zur sicheren Abscheidung bei einer leckagebedingten Freisetzung werden inzwischen oftmals Adsorber verwendet. Beispiele hierfür sind in der EP 3 486 582 A1, der EP 3 772 369 A1, der EP 3 693 683 A1, der EP3771905A1, sowie vielen weiteren Druckschriften beschrieben. Für die Zwecke der Abscheidung spielt es meist keine Rolle, ob der Adsorber in das ansonsten dichte Gehäuse einer Kältemaschine integriert ist oder ob er separat außerhalb steht. Ebenfalls variabel ist die Option, die Durchströmung des Adsorbers erst nach einer erkannten Leckage zu starten oder für eine permanente Durchströmung zu sorgen.

Auch ist es möglich, einen Adsorber lediglich bedarfsweise mit dem Gehäuse einer Kältemaschine oder Wärmepumpe zu verbinden. Wesentlich in diesem Zusammenhang ist, dass der Adsorber an seinem Einlass zum Innenraum des Gehäuses offen ist oder auf ein Signal hin geöffnet werden kann, ferner, dass er zum Außenbereich des Gehäuses hin offen oder auf ein Signal hin zu öffnen ist. Tritt im Innenraum des Gehäuses eine Leckage auf, bewirkt der sich einstellende Überdruck, dass mit Arbeitsfluid kontaminierte Luft in den Adsorber eintritt, die Kontamination auf dem Adsorptionsmittel adsorbiert wird und gereinigte Luft in die Umgebung geleitet wird. Diese Umgebung ist in der Regel der Innenraum eines Gebäudes.

Solche Leckagefälle sind zwar ausgesprochen selten, könnten aber verheerende Folgen haben, wenn das Arbeitsfluid gefährlich oder sogar brennbar ist und wenn nicht ausreichend Vorsorge getroffen wird. Aus diesem Grund werden solche Adsorber üblicherweise so ausgelegt, dass sie das gesamte Inventar an Arbeitsfluid aufnehmen könnten. Aber auch wenn das Arbeitsfluid nicht gefährlich oder brennbar ist, dafür aber bei seiner Freisetzung klimaschädliche oder ozonabbauende Wirkung hat, ist das Auffangen der Kontamination erforderlich. Auch dies kann mit geeigneten Adsorbenzien sicher durchgeführt werden.

Geeignete Adsorbenzien sind bekannt. Eine Aktivkohleschüttung als Adsorptionsmittel wird beispielsweise eingesetzt als Sicherheit vor einer Kontamination von R290 in Gehäusen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden und anderen Einrichtungen, wie Fahrzeugen, Kühlhäusern, medizinischen Apparaten und Industrieanlagen gebräuchlich sind. Die auftretenden Probleme bei der Sicherheitsauslegung solcher Anlagen werden in der WO 2015/032905 A1 anschaulich beschrieben. So liegt die untere Zündgrenze von Propan, welches den Hauptbestandteil des Arbeitsfluids R290 bildet, als Arbeitsfluid etwa bei 1,7 Volumenprozent in Luft, was 38 g/m³ in Luft entspricht.

Die DE 10 2011 116 863 A1 beschreibt ein Verfahren zur Sicherung einer Vorrichtung für einen thermodynamischen Kreisprozess, welche mit einem Prozessfluid betrieben wird, das mindestens eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert, indem das Adsorbat desorbiert wird. Als Adsorptionsmittel werden unter anderen Aktivkohle und Zeolithe vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die DE 195 25 064 C1 beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem Adsorptionsmittel gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Adsorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Adsorptionsmittel zwingen. Auch eine doppelwandige Ausführungsform, bei der das Adsorptionsmittel im Doppelmantel angeordnet ist, ist möglich. Am Ausgang des mit dem Adsorptionsmittels gefüllten Raumes zur Umgebung hin kann eine Messeinrichtung für Kältemittel vorgesehen werden.

Apparativ üblich sind auch durchströmte Kartuschen sowie Festbetten mit Rückhaltevorrichtungen, die Aktivkohle in diversen Formen enthalten. Die Auslegung solcher Apparate erfolgt, indem man die Beladungskapazität der Aktivkohle für jeden der abzuscheidenden Stoffe bestimmt, wobei die Beladungskapazität in der Regel stark temperaturabhängig ist, und die Durchströmungsmenge bestimmt. Hierbei ergibt sich im Idealfall ein Adsorptionsgleichgewicht und eine Durchbruchsfront zwischen beladenem und noch unbeladenem Adsorptionsmittel. Für zyklisch arbeitende Verfahren ist dies bekannter Stand der Technik.

Die US 5,160,512 A beschreibt eine Methode zur zyklischen Entfernung von Gasbestandteilen eines Gasstroms durch ein Festbett. Die Partikel des Festbetts weisen auf ihrer Oberfläche einen Flüssigkeitsfilm auf. Dieser Flüssigkeitsfilm absorbiert einen Teil des Gases und ermöglicht, dass der Rest des Gases von Adsorptionsmittel adsorbiert wird. Abzuscheidender Gasbestandteil ist Ammoniak, nach erfolgter Abscheidung wird das Adsorptionsmittel mit Dampf regeneriert und kann für den nächsten Zyklus zur Verfügung stehen. Ein Transport des Adsorptionsmittels ist nicht vorgesehen.

Die US 2019/0105594 A1 beschreibt ein Verfahren zur Herstellung von Synthesegas aus CO₂ und CH₄, bei dem zunächst eine Adsorption von CO₂ aus eingespeichertem CCS-Gas in einem ersten Adsorber vorgenommen wird und das adsorbierte CO₂ anschließend mittels Verdrängungsdesorption durch CH₄ aus dem ersten Adsorber desorbiert wird und beide Komponenten zusammen in einem zweiten Adsorptionsschritt und einem Katalysator zu Synthesegas umgesetzt werden. Ein Transport des Adsorptionsmittels ist nicht vorgesehen und auch nicht sinnvoll, da es sich um ein zyklisches Verfahren im Dauerbetrieb handelt.

Solches gilt vor allem für Abscheidungsvorgänge aus der Gasphase, wie bei leckagebedingt ausgetretenem Kältemittel. Meistens ist nach einem solchen Vorgang aber nicht genau bekannt, wie hoch die Beladung tatsächlich ist, da es sich dann nicht um ein zyklisches Arbeitsverfahren mit bekannten Verhältnissen handelt. Für den schlimmsten Fall kann man annehmen, dass sich das gesamte Kältemittel aus der ursprünglichen Füllung des Kältekreises als Adsorbat auf dem Adsorptionsmittel befindet.

Für die nachfolgend anstehenden Maßnahmen der Behandlung des beladenen Adsorptionsmittels ist man mit dieser Maximalannahme auf der sicheren Seite. Allerdings ergibt sich daraus ein Folgeproblem: Das beladene Adsorptionsmittel darf im Gegensatz zu unbeladenem Adsorptionsmittel nicht transportiert werden, weil es als Gefahrgut gilt. Beispielsweise schreiben die ADR-Vorschriften (ADR: Accordf européen relatif au Transport international des marchandises Dangereuses par Route) vor, dass zunächst die Gefährlichkeit des adsorbierten Kältemittels zu klassifizieren ist. Beim Kältemittel R290 gilt dann beispielsweise, dass der Transport in einem Druckbehälter zu erfolgen hat, der dauerhaft 5 bar Überdruck auszuhalten hat. Außerdem dürfen höchstens 0,42 kg Kältemittel je Liter Sorptionsmittel und nicht mehr als 5 kg absolut je Transporteinheit transportiert werden. Bei anderen Kältemitteln gilt entsprechendes.

Die Aufgabe der Erfindung ist daher, eine Vorrichtung und ein Verfahren bereitzustellen, welches einen mit beladenem Adsorptionsmittel gefüllten Adsorber, bei dem das Adsorbat aus einem adsorbierten Kältemittel und gegebenenfalls weiteren Kontaminanten besteht, transportfähig zu machen und den Adsorber entsprechend zu gestalten.

Die Erfindung löst diese Aufgabe mittels Verdrängungssorption durch ein Adsorptiv, welches selbst nicht als gefährlich eingestuft ist, jedoch eine höhere Affinität zum Adsorptionsmittel als das adsorbierte Arbeitsfluids bzw. Kältemittel hat.

Die Erfindung löst diese Aufgabe durch ein Verfahren zur Herstellung der Transportfähigkeit eines Adsorbers für gasförmige Stoffe, der ein beladenes, kontaminiertes Aktivkohlehaltiges Adsorptionsmittel mit einem Adsorbat enthält, der Adsorber aufweisend einen Gaseinlass und einen Gasauslass, ein durchströmbare Adsorptionsmittel aus Aktivkohle, sowohl am Gaseinlass als auch am Gasauslass gasdurchlässige Rückhalteeinrichtungen für Adsorptionsmittelmaterial, der mit Adsorbat beladene Adsorber mit einem Adsorptiv gefüllt wird, welches das Adsorbat durch ein ungefährliches Adsorbat verdrängt und das verdrängte Desorbat in einen Auffangbehälter gefüllt wird.

Ausgestaltungen des Verfahrens betreffen die Adsorptive, mit denen das gefährliche Adsorbat verdrängt wird. Hierbei ist vorgesehen, dass die Verdrängung alternativ erfolgt durch
- ein interhalogenhaltiges Adsorptiv,
- ein bromhaltiges Adsorptiv,
- Decabromdiphenylether,
- 1,1,1,2-Tetrafluorethan,
- 2,2,2,3-Tetrafluoroprop-1-en,
oder durch Kombinationen aus solchen Adsorptiven.

Die genannten Adsorptive liegen flüssig oder dampfförmig vor und werden mit Sprühkartuschen in den Adsorber gesprüht, wobei es nicht darauf ankommt, ob dies in Strömungsrichtung des adsorbierten Kältemittels erfolgt oder in Gegenrichtung. Beim Einsprühen wird eine Haube verwendet, damit nichts danebengerät. Auf der anderen Seite wird das verdrängte Kältemittel entweder aufgefangen oder ins Freie abgeleitet, je nachdem, wie die Umgebungsverhältnisse sind und wie sicher das Kältemittel aufgefangen werden kann. Beispielsweise können R290 oder CO₂ wegen ihres geringen GWP auch ins Freie abgelassen werden. Im Idealfall stehen eine Kältefalle und ein Auffangbehälter zur Verfügung.

Statt einer Sprühkartusche kann auch ein kleines druckseitiges Fördergebläse oder eine saugseitige Vakuumpumpe benutzt werden, es ist jedoch stets darauf zu achten, dass zu keiner Zeit ein entzündliches Gemisch entstehen kann.

In manchen Fällen kann das Verdrängungsmittel zwar selbst weder brennbar noch entzündlich sein, aber zur Entzündung beitragen, wenn das zu verdrängende, zuvor adsorbierte Kältemittel brennbar ist. Sofern dies zu befürchten ist, wird in Ausgestaltungen zusätzlich Feuerlöschpulver vorgesehen. Hierdurch werden Radikale gefangen und die Entzündlichkeit sinkt unter jedes bedenkliche Maß. Geeignet sind hierfür Feuerlöschpulver aus Monoammoniumphosphat, Ammoniumsulfat, Natriumhydrogenkarbonat, Kaliumhydrogenkarbonat, Kaliumsulfat, Kaliumchlorid, Natriumchlorid, Kalium-Ammonium-Carbamat oder Mischungen daraus gebildet.

Die Erfindung wird hauptsächlich für Kohlenwasserstoffe als Kältemittel verwendet, weil diese klima- und umweltfreundlich sind und außerdem im üblichen Anwendungsbereich ausgesprochen hohe Wirkungsgrade haben. Besonders geeignet ist die Verwendung des Verfahrens für R290, R1270, R32 und R600a.

Die Methode hat gegenüber anderen Adsorbensmaterial schonenderen Verfahrensweisen den Vorteil, dass sie besonders schnell abläuft und in der Regel innerhalb weniger Sekunden Transportfähigkeit herstellt. Sie ist in Gefahrenlagen die Methode der Wahl.

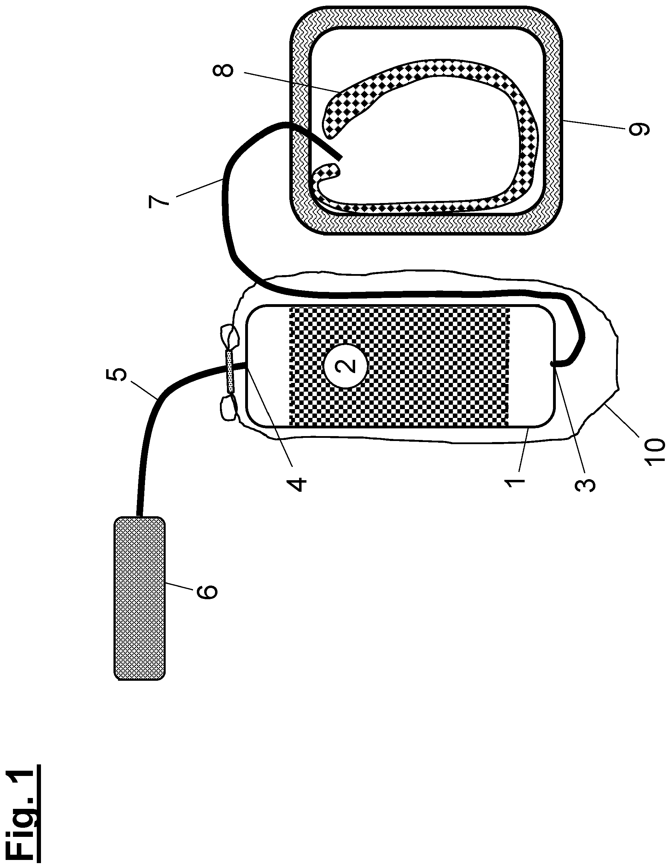

Die Erfindung wird nachfolgend einer einfachen Skizze näher erläutert. Hierbei zeigt Fig. 1 einen Adsorber 1 mit einer Aktivkohleschüttung 2, der einen Gaseinlass 3 und einen Gasauslass 4 aufweist, zusätzlich Halteeinrichtungen für die Schüttung. Das Verdrängungsmittel 5 wird aus der Kartusche 6 gegen die Strömungsrichtung in den Adsorber gegeben.

Das hat den Vorteil, dass die Beladungsspitze an adsorbiertem Kältemittel, die sich am Adsorbereinlass befindet, nicht erst durch die gesamte Schüttung zum Ausgang getrieben werden muss.

Das Kältemittel 7 wird in der flexiblen Kältefalle 8 aufgefangen und anschließend zusammen mit der Kältefalle 8 selbst oder separat in einen druckdichten Sicherheitsbehälter 9 eingeschlossen. Der Adsorber kann danach in eine dichte Plastikverpackung 10 verpackt und transportiert werden.

### Bezugszeichenliste

1: Adsorber
2: Aktivkohleschüttung
3: Gaseinlass
4: Gasauslass
5: Verdrängungsmittel
6: Kartusche
7: Kältemittel
8: Kältefalle
9: Sicherheitsbehälter
10: Plastikverpackung

## Patentansprüche

1. Verfahren zur Herstellung der Transportfähigkeit eines Adsorbers (1) für gasförmiges R290, R600a, R32 oder R270, der ein kontaminiertes aktivkohlehaltiges Adsorptionsmittel enthält, der Adsorber aufweisend einen Gaseinlass (3) und einen Gasauslass (4), ein durchströmbares Adsorptionsmittel (2) aus Aktivkohle, sowohl am Gaseinlass (3) als auch am Gasauslass (4) gasdurchlässige Rückhalteeinrichtungen für Adsorptionsmittelmaterial,
**dadurch gekennzeichnet, dass**
der mit Adsorbat beladene Adsorber (1) mit einem Adsorptiv (5) gefüllt wird, welches das Adsorbat durch ein ungefährliches Adsorptiv verdrängt und das verdrängte Adsorbat in einen Auffangbehälter (9) gefüllt wird.

2. Verfahren nach Anspruch 1, **dadurch gekennzeichnet, dass** das Adsorptiv im Adsorber durch ein interhalogenhaltiges Adsorptiv verdrängt wird.

3. Verfahren nach Anspruch 1, **dadurch gekennzeichnet, dass** das Adsorptiv im Adsorber durch ein bromhaltiges oder fluorhaltiges Adsorptiv verdrängt wird.

4. Verfahren nach Anspruch 3, **dadurch gekennzeichnet, dass** das Adsorptiv im Adsorber durch Decabromdiphenylether verdrängt wird.

5. Verfahren nach Anspruch 1, **dadurch gekennzeichnet, dass** das Adsorptiv im Adsorber durch 1,1,1,2-Tetrafluorethan verdrängt wird.

6. Verfahren nach Anspruch 1, **dadurch gekennzeichnet, dass** das Adsorptiv im Adsorber durch 2,2,2,3-Tetrafluoroprop-1-en verdrängt wird.

7. Verfahren nach einem der Ansprüche 1 bis 6, **dadurch gekennzeichnet, dass** das Adsorptiv im Adsorber außer durch ein Verdrängungsmittel anschließend durch Feuerlöschpulver belegt wird.

8. Verfahren nach Anspruch 7, **dadurch gekennzeichnet, dass** das Feuerlöschpulper aus Monoammoniumphosphat, Ammoniumsulfat, Natriumhydrogenkarbonat, Kaliumhydrogenkarbonat, Kaliumsulfat, Kaliumchlorid, Natriumchlorid, Kalium-Ammonium-Carbamat oder Mischungen daraus gebildet wird.

9. Vorrichtung zur Durchführung des Verfahrens nach einem der vorangegangenen Ansprüche, **gekennzeichnet durch** eine Auffangvorrichtung mit einer Kältefalle und einem druckdichten Auffangbehälter und einem Behälterverschluss.
